# EUROPÄISCHE PATENTSCHRIFT

(11) **EP 0 308 811 B1**
(45) Veröffentlichungstag und Bekanntmachung des Hinweises auf die Patenterteilung: **11.08.1993**
(21) Anmeldenummer: 88115101.3
(22) Anmeldetag: 15.09.1988
(51) Int. Cl.: B32B 33/00, B29C 59/16, B29C 71/04, D06M 10/00

(54) **Verfahren zum Herstellen eines selbsttragenden Flächengebildes mit überlegenen antistatischen Eigenschaften**
Method of producing a self-supporting antistatic sheet
Procédé de production d'une feuille autoportante antistatique

(30) Priorität: 24.09.1987 DE 3732166
(43) Veröffentlichungstag der Anmeldung: 29.03.1989
(73) Patentinhaber: HOECHST AKTIENGESELLSCHAFT, 65926 Frankfurt am Main (DE)
(72) Erfinder: Bothe, Lothar, Dr., D-6500 Mainz-Gonsenheim (DE); Gribbin, John Derek, Dr., D-6229 Schlangenbad 2 (DE); Dinter, Peter, D-6227 Oestrich-Winkel 3 (DE)

(56) Entgegenhaltungen:
- EP-A- 0 178 552
- DE-A- 3 705 482
- US-A- 3 274 089

## Beschreibung

Die Erfindung betrifft ein Verfahren zum Herstellen eines Flächengebildes, bei dem ein antistatisch wirkendes Mittel zunächst in einem Löse- oder Dispersionsmittel, insbesondere in einem wäßrigen Löse- oder Dispersionsmittel, gelöst oder dispergiert wird und bei dem dann die Lösung oder Dispersion zusammen mit einem Trägergastrom auf die Oberfläche eines sich durch einen Coronaentladungsraum einer elektrischen Coronaentladung mit konstanter Transportgeschwindigkeit bewegenden Substrates als Aerosol versprüht wird.

Die Erfindung betrifft ferner ein Flächengebilde hergestellt nach dem Verfahren, mit einem guthaftenden und gleichmäßigen antistatischen Überzug.

Viele Werkstoffe sind wegen ihrer chemischen Zusammensetzung für den elektrischen Strom garnicht oder nur in praktisch nicht meßbarem Umfang leitfähig und gelten daher im allgemeinen als Isolatoren. Die geringe Leitfähigkeit dieser Werkstoffe ist jedoch die Ursache, daß sie an ihrer Oberfläche oftmals sehr hohe elektrostatische Aufladungen ansammeln, die, insbesondere bei flächenhaften Polymererzeugnissen wie Folien und Platten, zu einer Vielzahl von nachteiligen Störungen bis hin zur Unbrauchbarkeit des Erzeugnisses führen können und die aus diesem Grund in hohem Maße unerwünscht sind. Die Aufladungen entstehen während der Produktion, Weiterverarbeitung oder Gebrauch der Flächenerzeugnisse überall dort, wo sich Reibungsvorgänge an Kanten, Wendestangen usw. abspielen bzw. wo sich zwei Materialien berühren und anschließend wieder trennen (Trennvorgänge), z.B. an Rollen, und sie können zu Produktionsstörungen, Staubansammlungen, zur Beeinflussung von Meß- und Regelinstrumenten und sogar zu Explosionen führen. Beim Bedrucken von flächigen Polymersubstraten wie z.B. im Siebdruck können die elektrostatischen Aufladungen sich sogar in so großem Ausmaß negativ auswirken, daß die Farbe aus der Druckform bzw. Schablone herausspringt. Große statische Aufladungen (mehr als 5000 V) können Gas/Luft-Gemische aus verdunstenden Lösungsmitteln entzünden, und kleine statische Aufladungen (weniger als 1000 V) können die Oberflächen durch Bildung von Streifen, Staub- und Schmutzsansammlungen optisch beeinflussen oder zerstören.

Die naturwissenschaftlichen, physikalischen Zusammenhänge, die zum Entstehen der elektrostatischen Aufladungen führen, sind nicht immer ganz eindeutig zu erklären, im allgemeinen nimmt man jedoch an, daß beim Kontakt von Festkörpern Elektronen bzw. auch Ionen von einem Körper auf den anderen überwechseln. Das Überwechseln wird durch Reibung verstärkt, weil sich die tatsächlichen Berührungspunkte vergrössern.

Die Größe der elektrostatischen Aufladung hängt von der elektrischen Leitfähigkeit der Stoffe ab. Gute Leiter sind z.B. Metalle, Ruß, Graphit und Polyene. Diese verlieren ihre Aufladung als gute Leiter sofort, während schlechte Leiter, insbesondere Polymere, ihre Ladung über längere Zeiträume (Sekunden bis Minuten und sogar mehrere Tage) aufrechterhalten.

Die geschilderten Probleme sowie verschiedene Ansätze zu deren Lösung sind in zahlreichen Literaturbeiträgen dargestellt und diskutiert worden, für die stellvertretend auf B. Naber, "Antistatische Ausrüstung von Polymeren, eine Literaturübersicht" in 'Plaste und Kautschuk' (1981), Seiten 6 bis 9, verwiesen werden soll.

All die vielen bekannten Lösungen sind jedoch noch als verbesserungsbedürftig anzusehen, insbesondere was die Gleichmäßigkeit und Dauerbeständigkeit der antistatischen Ausrüstung anbetrifft.

Es besteht daher die Aufgabe, ein Verfahren zur Herstellung von Flächengebilden wie Folien, Platten, Geweben mit geringer elektrischer Leitfähigkeit zu schaffen, die überlegene antistatische Eigenschaften besitzen, insbesondere was die Gleichmäßigkeit der antistatischen Eigenschaften gemessen über die gesamte Oberfläche betrifft sowie deren Dauerbeständigkeit bei mechanischer Einwirkung zu erhöhen.

Gelöst wird die Aufgabe durch ein Verfahren der eingangs genannten Gattung in der Weise, daß das antistatisch wirkende Mittel in Konzentrationen bzw. mit Feststoffgehalten im Bereich von 0,5 bis 50 Gew.-% an antistatisch wirkendem Mittel eingesetzt wird, bezogen auf das Gesamtgewicht der Lösung bzw. der Dispersion.

Als Substratschicht können im Rahmen des Verfahrens prinzipiell alle Materialien eingesetzt werden, die zu den eingangs erwähnten Materialien mit ausgesprochen geringer elektrischer Leitfähigkeit zu rechnen sind, insbesondere Polymere, die in Form von Folien, Papier, Platten oder Geweben vorgelegt werden können.

Beispiele für Polymere sind insbesondere Polymerfolien, z.B. Folien aus natürlichen und synthetischen Polymeren wie Cellulose, Celluloseester, Polyvinylchlorid, Polystyrol, Styrolcopolymere mit Butadien, Polycarbonat, Polymere und Copolymere von Olefinen wie Ethylen, Propylen, Butylen, Methylpenten usw., Polysulfon, aliphatischen und aromatischen Polyestern, Polyimiden, Polyisobutylen, Polymethylmethacrylat, Polyphenylensulfid, Polyurethan, Polyamid, Polyaryletherketon, Polyaryletheretherketon, Polyarylethersulfon, Polyamidimid, Polyetherimid usw. (vgl. Ullmanns Encyclopädie der technischen Chemie, Verlag Chemie, Weinheim, 4. neubearbeitete und erweiterte Auflage (1976), Seite 673 ff; Encyclopedia of Polymer Science and Eng., Vol. 7, John Wiley & Sons (1973), Seite 73 ff). Die Herstellung von selbsttragenden, orientierten oder nicht orientierten Folien aus den genannten Polymeren erfolgt nach verschiedenen bekannten Technologien, die in der zitierten Literatur ebenfalls beschrieben sind, wobei unter dem Begriff selbsttragende Folie sowohl Monofolien aus einer Schicht wie auch Mehrschichtfolien aus mehreren Schichten aus gleichen oder verschiedenen Polymermaterialien oder Laminate enthaltend Schichten aus Kunststoffen und aus Nichtkunststoffen wie z.B. Papier oder Metall zu verstehen sein sollen.

Wird Papier als Substratmaterial verwendet, so können selbstverständlich alle Sorten von üblichen Papieren eingesetzt werden, wobei jedoch insbesondere mit Kunstharzen imprägnierte Papiere, die besonders anfällig gegen elektrostatische Aufladung sind, als Substratschicht eingesetzt werden. Weiterhin sind von ganz besonderem Interesse sogenannte synthetische Papiere, wie sie detailliert in "Synthetic Polymers And The Paper Industry" (Autor: Vladimir M. Wolpert), Miller Freeman Publication, Inc., San Francisco (USP), 1977, beschrieben sind. Bei solchen Flächengebilden, die anorganische Füllstoffe wie z. B. CaCO₃, TiO₂, SiO₂ usw. enthalten, zeigt sich allgemein die Schwierigkeit, daß die Füllstoffe die Antistatika, wenn diese innerhalb der Folie verteilt sind, an ihrer Oberfläche adsorbieren und damit deren antistatische Wirkung herabsetzen. Für solche Flächengebilde bietet daher das Verfahren ganz besondere Vorteile.

Als plattenförmige Substratschichten seien beispielhaft insbesondere Substratschichten auf Basis von geschäumten Polymeren (z.B. Polystyrol) genannt.

Als Substratmaterial sind ferner alle Arten von Geweben die antistatische Eigenschaften erhalten, insbesondere jedoch Kunstfasergewebe, geeignet. Beispiele hierfür sind Gewebe auf Basis von Polyestern, Polyacrylnitril, Polyamiden und Viskose sowie Mischungen von diesen oder Mischungen dieser mit natürlichen Fasern. Insbesondere im Hinblick auf die Bedruckung der Gewebe oder ganz besonders auf die Trageeigenschaften von Kleidungsstücken ist es wünschenswert, die Gewebe mit einer wirksamen und vor allem dauerbeständigen antistatischen Ausrüstung zu versehen, wie dies erfindungsgemäß bewirkt wird.

Der antistatische Überzug auf der Substratschicht entsteht durch das gleichzeitige Einwirken einer elektrischen Coronaentladung in Anwesenheit eines Aerosols auf die Substratoberfläche. Durch die Coronaentladung werden Reaktionsmechanismen ausgelöst und begünstigt, die eine chemische Oberflächenmodifizierung des behandelten Substrats zur Folge haben. Man stellt sich vor, daß durch die Coronaentladung das Aerosol bzw. die darin enthaltenen antistatisch wirksamen Mittel auf der Substratoberfläche festhaftend verankert werden.

Die spannungsführende Elektrode wird für die Coronaentladung von einem Hochspannungsgenerator mit einer Wechselspannung zwischen 5 000 und 25 000 V beaufschlagt. Die zwischen der spannungsführenden Elektrode und der geerdeten Gegenelektrode anliegende Wechselspannung soll dabei proportional zu der Transportgeschwindigkeit sein, mit der sich das zu behandelnde Substrat durch die Coronaentladungszone bewegt, d.h. bei höherer Transportgeschwindigkeit soll sich die Wechselspannung im oberen Bereich bewegen, während bei geringeren Transportgeschwindigkeiten eine mittlere bis niedrige Spannung im Bereich von 5 000 bis 18 000 V eingestellt werden kann, um eine gleich große Wirkung zu erzielen.

Die Herstellung der Aerosole kann mit Hilfe bekannter Zweistoff-Zerstäubungsdüsen oder mittels piezoelektrischer Ultraschall-Zerstäubungssysteme erfolgen. Zur Herstellung der Aerosole können Emulsionen, bevorzugt Dispersionen und Lösungen nieder- und/oder hochmolekularer antistatisch wirkender Mittel, eingesetzt werden, die in Löse- und Dispersionsmitteln, ganz besonders bevorzugt in Wasser, vorliegen.

Ein Verfahren zur Behandlung der Oberflächen von Kunststoffsubstraten mittels Coronaentladung bei gleichzeitiger Aerosolbesprühung sowie eine Anordnung zur Durchführung dieses Verfahrens ist in allen Einzelheiten bereits in der EP-A-0 279 371 angegeben Diese ältere, am 24.08.88 veröffentlichte europäische Anmeldung, genißt die Priorität vom 20.02.87. Ihr Inhalt gilt daher als Stand der Technik im Sinne des Artikels 54(3) und (4) EPÜ.

Als antistatisch wirkendes Mittel eignen sich bei dem erfindungsgemäßen Verfahren für wäßrige Lösungen/Dispersionen z.B. quaternäre Ammoniumverbindungen (beispielhaft seien genannt Cholinchlorid, Cholinesterchlorid), Alkylsulfonate und -sulfate, Aminsalze oder Polymere und Copolymere, die quaternäre Ammoniumchloridgruppierungen enthalten.

Als Trägergas wird im einfachsten Fall Luft eingesetzt, es kann aber auch Stickstoff oder ein anderes inertes Gas, z.B. ein Edelgas, eingesetzt werden. Besonders vorteilhafte Verankerungseffekte können andererseits auch mit reaktionsfähigen Gasen wie beispielsweise mit Halogenen, Kohlendioxid, Ammoniak oder Formaldehyd, gegebenenfalls in Mischung mit inerten Gasen, erzielt werden.

Der antistatische Überzug kann nach dem erfindungsgemäßen Verfahren nach der Fertigstellung der Substratschicht, off-line, auf diese aufgebracht werden, dies gilt insbesondere, wenn als Substratschicht Papier oder plattenförmige Substratschichten eingesetzt werden sollen. Der antistatische Überzug kann jedoch genausogut auch während des Herstellungsprozesses der Substratschicht, in-line, aufgebracht werden. Bekanntlich werden z.B. biaxial orientierte Folien aus thermoplastischen Kunststoffen durch Extrudieren einer Schmelze, nachfolgendes biaxiales Streckorientieren und anschließendes Hitzefixieren hergestellt. Dabei kann der antistatische Überzug vor, zwischen oder nach den einzelnen in aufeinanderfolgender Reihenfolge ablaufenden Streckschritten aufgebracht werden oder vor oder nach der Hitzefixierung. Im Fall von Geweben kann der antistatische Überzug bereits bei der Herstellung der Fasern auf diese aufgebracht werden oder aber erst auf das bereits fertiggestellte Gewebe.

Aufgrund des besonderen erfindungsgemäßen Auftragverfahrens weist der antistatische Überzug eine besonders gute Haftung auf der Substratoberfläche auf. Die Schichtdicke des antistatischen Überzugs entspricht üblicherweise einem Flächengewicht im Bereich von nur 0,2 bis 10 mg/m².

Als Verwendungszweck für das erfindungsgemäße Verfahren eignen sich alle Anwendungsgebiete, bei denen antistatische Eigenschaften wünschenswert sind. Besonders erwähnt sei zum Beispiel der Einsatz von Verpackungsfolien auf schnellaufenden Verpackungsmaschinen oder die Verwendung von Folien für Klebebänder oder Magnetbänder. Wenn Bedruckungen oder Beschichtungen aufgebracht werden sollen, kommt es wie eingangs erwähnt in besonders hohem Maß auf antistatische Eigenschaften an, dies gilt für alle die angesprochenen Materialien für Substratschichten. Weitere Einsatzgebiete für das erfindungsgemäße Verfahren sind außerdem die Kaschierung und die Verwendung als Trennfolien.

Durch die nachfolgenden Beispiele sollen die Erfindung und die damit zu erreichenden nacharbeitbaren Vorteile noch deutlicher beschrieben werden.

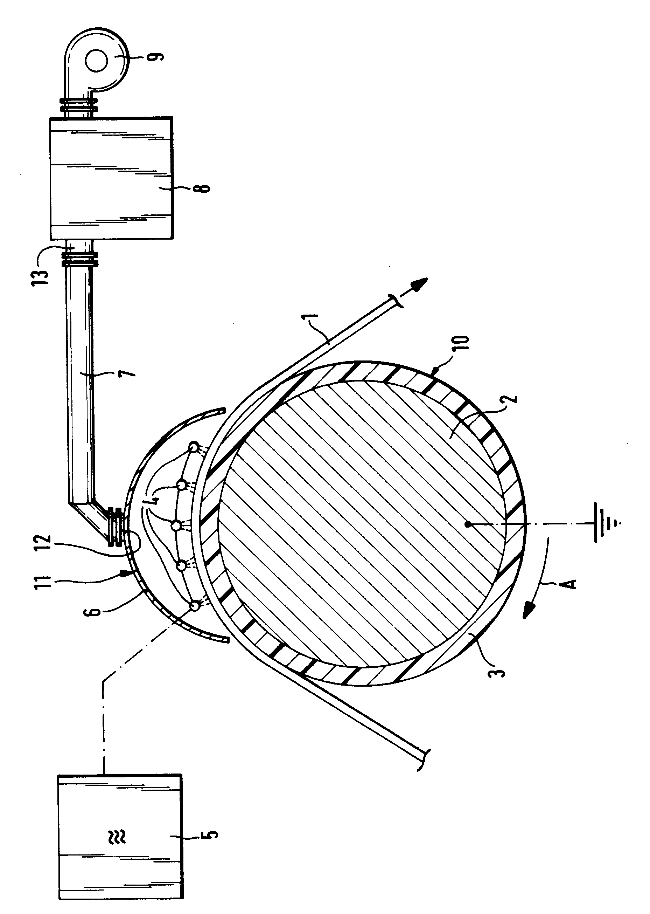

Mittels einer Aerosol-Corona-Vorrichtung entsprechend der beigefügten Figur wurden verschiedene Polymerfolien behandelt. Die Vorrichtung besteht aus einem Generator 5 und einer Coronaentladungseinrichtung 11. Der Generator beaufschlagt die Entladungselektroden 4 der Coronaentladungseinrichtung 11 mit einem hochfrequenten Wechselstrom hoher Spannung. Als geerdete Gegenelektrode dient der Metallkern 2 einer Walze 10, über deren Umfangsbeschichtung 3 die selbsttragende Polymerfolienbahn 1 transportiert wird. Ein Gehäuse 6 umschließt die Elektroden 4 der Coronaentladungseinrichtung 11 und ist über eine Leitung 7 mit einer Zerstäubereinrichtung 8 verbunden, in der eine wäßrige Flüssigkeit zu einem schwebefähigen Aerosol mittels eines piezoelektrisch arbeitenden Ultraschallsystems zerstäubt wird. Ein Gebläse 9 ist an die Zerstäubungseinrichtung angeschlossen und befördert das Trägergas (Luft) für das Aerosol durch die Zerstäubungseinrichtung hindurch in die Coronaentladungseinrichtung 11.

Die Transportgeschwindigkeit der selbsttragenden Polymerfolien beträgt, wenn nicht anders vermerkt, 20 m/min. Die Coronaleistung betrug jeweils 1 000 W (entsprechend einer Einstellung von 5 500 V).

Die antistatischen Eigenschaften der Beispiele und Vergleichsbeispiele wurden durch Messung des elektrischen Oberflächenwiderstandes gemäß DIN 53 482 charakterisiert.

Die Messung des Oberflächenwiderstandes erfolgte jeweils an fünf Stellen verteilt über die gesamte Folienbreite.

### Beispiel 1

Mit Hilfe des Coextrusionsverfahrens wurden aus einer Breitschlitzdüse von 280 mm Breite und 1,8 mm Spalthöhe bei einer Extrusionstemperatur von 260°C und einer Fördermenge von 70 kg/h als Summe 1 mm dicke dreischichtige Folien extrudiert, wobei die Basisschicht jeweils aus Polypropylen mit einem Schmelzflußindex von 2 g/10 min (bei 230°C und 2,16 kp Belastung) und die zwei Deckschichten jeweils verschieden zusammengesetzt waren. Die coextrudierten Folien wurden nach Durchlaufen einer 20 mm langen Luftstrecke auf einer 30°C warmen Kühlwalze des Durchmessers 600 mm abgeschreckt, die mit einer Umfangsgeschwindigkeit von 4,5 m/min lief. Danach wurden die Folien von der Kühlwalze auf ein Walzentrio von ebenfalls 30°C und einer Umfangsgeschwindigkeit von ebenfalls 4,5 m/min übergeben und dann nach Erwärmung auf 130°C von einem weiteren Walzentrio um den Faktor 5 längsgestreckt. Anschließend wurden sie bei 175°C auf das Zehnfache in Querrichtung verstreckt. Die Thermofixierung erfolgte bei 160°C 5 s lang.

Die Basisschicht der erhaltenen Mehrschichtfolien war jeweils 19 µm dick, und die auf den beiden Seiten vorhandenen Deckschichten hatten eine Dicke von jeweils 0,5 bis 0,8 µm. Die Deckschichten bestanden aus einem Polypropylen mit einem Schmelzindex von 4 g/10 min (bei 230°C und 2,16 kp Belastung), 0,2 Gew.-% Natriumbenzoat (die Teilchen sind kleiner als 10 µm, und der mittlere Teilchendurchmesser ist 1,6 µm) und 0,4 Gew.-% Aluminiumsilikat mit einem Aspect Ratio von 6 (die Teilchen sind kleiner als 10 µm, und die mittlere Partikelgröße ist 0,55 µm).

Die so hergestellte Folie wurde nach drei verschiedenen Verfahrensvarianten unter Anwendung eines Aerosols aus einer 4 Gew.-%igen wäßrigen Lösung eines quaternären Ammoniumsalzes der nachfolgend angegebenen Formel 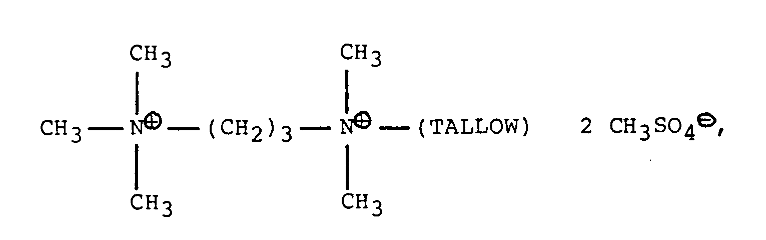
das unter dem Warenzeichen ^{(R)}LEOMIN FA als Antistatikum erhältlich ist, behandelt.
- Verfahrensvariante V₁:: Erfindungsgemäße Kombination von Coronabehandlung und gleichzeitiger Aerosolbeaufschlagung.
- Verfahrensvariante V₂:: Aerosolbeaufschlagung ohne Coronabehandlung.
- Verfahrensvariante V₃:: Zuerst Coronabehandlung ohne Aerosolbeaufschlagung, im Anschluß daran Aerosolbeaufschlagung (ohne gleichzeitige Coronabehandlung).

Die Ergebnisse sind in der nachfolgenden Tabelle als Beispiel 1 und Vergleichsbeispiele (VB 1A und VB 1B) zusammengefaßt.

### Beispiel 2

Eine Folie wie in Beispiel 1 wurde mit einer 1 Gew.-%igen wäßrigen Lösung von Cholinesterchlorid, einem Antistatikum, das unter dem Produktnamen ^{(R)}HB 155 von der Firma Antistatika Peter Urdahl erhältlich ist, in Form eines Aerosols nach den in Beispiel 1 beschriebenen Verfahrensvarianten V₁ bis V₃ behandelt.

Die Ergebnisse dieses Versuchs sind als Beispiel 2 und als Vergleichsbeispiele (VB 2A und VB 2B) in der Tabelle dargestellt.

### Beispiel 3a

Es wurde eine Polypropylenfolie mit beidseitig vorhandenen Oberflächenschichten bei etwa 270°C durch eine Flachdüse coextrudiert. Die Mischung (Schmelze) der die Basisschicht bildenden Folie bestand aus 80 Gew.-Teilen Propylen-Homopolymerisat und 20 Gew.-Teilen pulverförmigem Calciumcarbonat mit einer mittleren Teilchengröße von 3,8 µm. Die Schmelze des die Oberflächenschichten bildenden Polymeren bestand aus einem statistischen Copolymerisat von Propylen und 4 Gew.-% Ethylen. Nach dem Abkühlen der coextrudierten Folie mit einer Kühlwalze auf etwa 30°C wurde die Folie bei 125°C in Längsrichtung, Streckverhältnis 6,0, und dann bei 165°C in Querrichtung, Streckverhältnis 9,0, gestreckt. Die anschließende Thermofixierung erfolgte bei 160°C 5 s lang.

Die so erhaltene opake Mehrschichtfolie hatte eine Dichte von 0,46 g/cm³ und eine Dicke von 35 µm, die Dicke der Heißsiegelschichten betrug jeweils 1 µm.

Die Folie wurde unter Anwendung einer in Beispiel 2 genannten Lösung des Antistatikums ^{(R)}HB 155 nach den in Beispiel 1 angegebenen Verfahrensvarianten V₁ bis V₃ behandelt. Die Versuchsergebnisse sind als Beispiel 3 und Vergleichsbeispiele (VB 3A und VB 3B) in der Tabelle angegeben.

### Beispiel 3b

Beispiel 3a wurde wiederholt, wobei den Deckschichten zusätzlich jeweils 6 Gew.-% TiO₂-Teilchen, bezogen auf das Gewicht der Deckschichten, zugesetzt wurden, um den papierartigen Charakter der Folie aus Beispiel 3a zu steigern. Die Versuchsergebnisse entsprechen denen von Beispiel 3a.

### Beispiel 4

Ein Polyethylenterephthalatrohstoff, der 3 000 ppm Bariumsulfat als Schlupfmittel enthielt, wurde aufgeschmolzen, in einer Breitschlitzdüse zu einer Folie geformt und auf einer hochglanzpolierten Abkühlwalze mit einer Oberflächentemperatur von 40°C zu einer amorphen Folie abgeschreckt. Die Vorfolie wurde anschließend bei 95°C längsgestreckt und bei 110°C quergestreckt, wobei das Flächenstreckverhältnis 13 betrug. Die 14,5 µm dicke Folie wurde anschließend bei 230°C Rahmentemperatur thermofixiert.

Die Folie von Beispiel 4 wurde nach den in Beispiel 1 genannten Verfahrensvarianten V₁ bis V₃ mit einer ebenfalls in Beispiel 1 angegebenen Lösung des Antistatikums ^{(R)}LEOMIN FA behandelt. Die Ergebnisse sind in der Tabelle als Beispiel 4 und Vergleichsbeispiele (VB 4A und VB 4B) angegeben.

### Beispiel 5

Eine biaxial streckorientierte Polyethylenterephthalatfolie, die beidseitig mit einem Überzug aus vernetztem Polydimethylsiloxan off-line beschichtet war und die eine Gesamtdicke von 50 µm aufwies, wobei die Deckschichten jeweils höchstens 50 nm dick waren, wurde mit der Lösung aus Beispiel 1 nach der Verfahrensvariante V₁ behandelt. Das Ergebnis und die an dieser Folie gemessenen Oberflächenwiderstände sind in der Tabelle unter Beispiel 5 angegeben.

### Beispiel 6

Eine Hartfolie aus Polyvinylchlorid mit einer Dicke von 50 µm aus S-PVC mit einem K-Wert von 60 wurde unter Anwendung der in Beispiel 1 genannten Lösung nach den Verfahrensvarianten V₁ bis V₃ behandelt.

Die Ergebnisse dieser Versuche sind in der Tabelle unter Beispiel 6 und Vergleichsbeispiele (VB 6A und VB 6B) angegeben.

### Beispiel 7

Eine Folie aus Polytetrafluorethylen mit einer Schichtdicke von 100 µm wurde unter Anwendung der in Beispiel 1 angegebenen Lösung des Antistatikums nach der Verfahrensvariante V₁ behandelt. Das Ergebnis ist in der Tabelle als Beispiel 7 angegeben.

| | Oberflächenwiderstand über *) die Folienbreite gemessen | | | | | Gleichmäßigkeit über die Folienbreite |
|---|---|---|---|---|---|---|
| | 1 | 2 | 3 | 4 | 5 | |
| Beispiel 1 | 8·10⁷ | 8·10⁷ | 7·10⁷ | 7·10⁷ | 8·10⁷ | sehr gut |
| VB 1A | 5·10¹² | 1·10¹² | 9·10¹² | 5·10¹² | 8·10¹¹ | mäßig |
| VB 1B | 6·10⁹ | 4·10¹⁰ | 8·10¹⁰ | 8·10⁹ | 3·10⁹ | mäßig |
| Beispiel 2 | 3·10⁷ | 3·10⁷ | 2·10⁷ | 2·10⁷ | 3·10⁷ | sehr gut |
| VB 2A | 8·10¹¹ | 3·10¹² | 4·10¹¹ | 9·10¹² | 4·10¹¹ | mäßig |
| VB 2B | 2·10⁹ | 2·10¹⁰ | 6·10¹⁰ | 5·10⁹ | 4·10¹⁰ | mäßig |
| Beispiel 3a | 1·10⁷ | 2·10⁷ | 2·10⁷ | 1·10⁷ | 2·10⁷ | sehr gut |
| Beispiel 3b | 1·10⁷ | 1·10⁷ | 2·10⁷ | 2·10⁷ | 1·10⁷ | sehr gut |
| VB 3A | 3·10¹² | 5·10¹¹ | 8·10¹² | 2·10¹² | 3·10¹¹ | mäßig |
| VB 3B | 4·10¹⁰ | 3·10⁹ | 6·10⁹ | 4·10⁹ | 7·10¹⁰ | mäßig |
| Beispiel 4 | 2·10⁷ | 2·10⁷ | 3·10⁷ | 3·10⁷ | 3·10⁷ | sehr gut |
| VB 4A | 4·10⁹ | 4·10¹² | 6·10¹⁰ | 8·10¹¹ | 2·10¹⁰ | mäßig |
| VB 4B | 9·10⁹ | 6·10⁹ | 2·10¹⁰ | 3·10⁹ | 7·10⁹ | mäßig |
| Beispiel 5 | 3·10⁸ | 3·10⁸ | 4·10⁸ | 3·10⁸ | 3·10⁸ | sehr gut |
| Beispiel 6 | 2·10⁷ | 1·10⁷ | 2·10⁷ | 1·10⁷ | 1·10⁷ | sehr gut |
| VB 6A | 1·10¹⁰ | 5·10¹⁰ | 6·10¹¹ | 2·10¹⁰ | 1·10¹¹ | mäßig |
| VB 6B | 8·10⁸ | 5·10⁸ | 2·10⁹ | 6·10⁹ | 6·10⁸ | mäßig |
| Beispiel 7 | 1·10⁹ | 2·10⁹ | 2·10⁹ | 2·10⁹ | 2·10⁹ | sehr gut**) |

| | | | | | | |
|---|---|---|---|---|---|---|
| *) Einheit des Oberflächenwiderstandes: Ω | | | | | | |
| **) Bei Beispiel 7 wurde aufgrund der geringen Folienbreite (6 cm) des Musters die Gleichmäßigkeit des Oberflächenwiderstandes in Folienrichtung jeweils im Abstand von 1 m bestimmt. | | | | | | |

Der Oberflächenwiderstand der unbehandelten Folien lag in allen Beispielen über 10¹³.

Ein weiterer Vorteil der Erfindung ist die besonders festhaftende Verankerung des antistatischen Überzugs auf der Substratschicht. An Folien gemäß Beispiel 3a, VB 3A und VB 3B wurde die Dauerbeständigkeit bzw. Verankerung des antistatischen Überzugs gegenüber mechanischer Einwirkung geprüft. Zu diesem Zweck wurde jeweils zehnmal mit einem Wattebausch über die Folienoberfläche mit einem Anpreßdruck von im Bereich von 1 bis 5 kPa gewischt. Bei den erfindungsgemäßen Folien (Beispiel 3a) zeigte sich kein Einfluß auf den Oberflächenwiderstand. Bei Folien gemäß VB 3A und VB 3B stieg der Oberflächenwiderstand um ca. zwei Zehnerpotenzen an.

Weiterhin wurde unter Einsatz der Folien gemäß Beispiel 3a, VB 3A und VB 3B ein Bogenoffsetdruckversuch durchgeführt. Zu diesem Zweck wurden jeweils Stapel von eintausend Bögen (Formatgröße 500 mm x 700 mm) aus den jeweiligen Folien hergestellt und auf einer Offsetdruckmaschine verarbeitet. Während sich die erfindungsgemäße Folie problemlos verarbeiten ließ, kam es bei den Vergleichsfolien zu starken Störungen im Druckablauf, da bei der automatischen Entnahme des jeweils obersten Folienbogens bedingt durch antistatische Aufladung fast immer zwei oder mehrere Folienbögen abgezogen wurden, was den weiteren Druckablauf unmöglich machte.

## Patentansprüche

1. Verfahren zum Herstellen eines Flächengebildes, bei dem ein antistatisch wirkendes Mittel zunächst in einem Löse- oder Dispersionsmittel, insbesondere in einem wäßrigen Löse- oder Dispersionsmittel, gelöst oder dispergiert wird und bei dem dann die Lösung oder Dispersion zusammen mit einem Trägergastrom auf die Oberfläche eines sich durch einen Coronaentladungsraum einer elektrischen Coronaentladung mit konstanter Transportgeschwindigkeit bewegenden Substrates als Aerosol versprüht wird, wobei das antistatisch wirkende Mittel in Konzentrationen bzw. mit Feststoffgehalten im Bereich von 0,5 bis 50 Gew.-% an antistatisch wirkendem Mittel eingesetzt wird, bezogen auf das Gesamtgewicht der Lösung bzw. der Dispersion.

2. Verfahren nach Anspruch 1, wobei als Trägergas ein inertes Gas wie Luft, Stickstoff oder ein Edelgas eingesetzt wird.

3. Verfahren nach Anspruch 1, wobei als Trägergas ein reaktionsfähiges Gas wie Halogene, Kohlendioxid, Ammoniak oder Formaldehyd, gegebenenfalls in Mischung mit inerten Gasen eingesetzt wird.

4. Verfahren nach Anspruch 1, wobei als antistatisch wirkende Mittel wäßrige Lösungen oder Dispersionen von quaternären Ammoniumverbindungen, Alkylsulfonaten und -sulfaten, Aminsalzen oder Polymeren und Copolymeren, die quaternäre Ammoniumchloridgruppierungen enthalten, eingesezt werden.

5. Flächengebilde hergestellt nach dem Verfähren gemäß einem der Ansprüche 1 bis 4 mit einem guthaftenden und gleichmäßigen antistatischen Überzug, welcher Überzug eine Schichtdicke entsprechend einem Flächengewicht im Bereich von 0,2 bis 10 mg/m² aufweist.

## Claims

1. Process for the production of a sheet-like article, wherein an antistatic agent is first dissolved or dispersed, in particular in an aqueous solvent or dispersant, and the solution or dispersion is then sprayed, as an aerosol, together with a carrier-gas stream, onto the surface of a substrate moving through the corona discharge area of an electrical corona discharge at a constant transportation speed, the antistatic solution or dispersion being used in concentrations or with solid contents of 0.5 to 50 weight percent of antistatic agent, calculated based on the total weight of the solution or dispersion.

2. Process according to claim 1, where an inert gas, such as air, nitrogen or a noble gas is used as the carrier gas.

3. Process according to claim 1, where a reactive gas such as a halogen, carbon dioxide, ammonia or formaldehyde, optionally in admixture with inert gases, is used as the carrier gas.

4. Process according to claim 1, where aqueous solutions or dispersions of quaternary ammonium compounds or alkyl sulfonates or alkyl sulfates or amino salts or polymers or copolymers containing quaternary ammonium chloride groups are used as antistatic agents.

5. Sheet-like article produced using the process as claimed in any of claims 1 to 4 and possessing a firmly adhering, uniform antistatic coating, where the thickness of said coating corresponds to a weight per unit area in the range of 0.2 to 10 mg/m².

## Revendications

1. Procédé de préparation d'une structure plane par lequel dans un premier temps, on dissout, respectivement ou met en dispersion, un agent antistatique dans un solvant, respectivement dans un agent de dispersion, et particulièrement dans un solvant aqueux, respectivement un agent de dispersion aqueux, et par lequel ensuite on vaporise, comme aérosol, cette solution ou dispersion au moyen d'un courant de gaz propulseur sur la surface d'un substrat mobile se déplaçant à vitesse constante dans une zone de décharge Corona, d'une décharge Corona électrique et dans lequel on utilise un agent à effet antistatique dans une concentration variant de 0,5 à 50 % en poids, respectivement en présence de matière solide, par rapport au poids total de la solution, respectivement de la dispersion.

2. Procédé selon la revendication 1, dans lequel on utilise, comme gaz propulseur, un gaz inerte tel que l'air, l'azote ou bien un gaz rare.

3. Procédé selon la revendication 1, dans lequel on utilise, comme gaz propulseur, un gaz réactif tel que des halogènes, le dioxyde de carbone, l'ammoniac, le formaldéhyde, éventuellement inchangé à un gaz inerte.

4. Procédé selon la revendication 1, dans lequel on utilise, comme agent à effet antistatique, des solutions ou des dispersions aqueuses de dérivés d'ammonium quaternaire, des sulfonates d'alkyle ou des sulfates d'alkyle, des sels d'amines ou des polymères et des copolymères qui contiennent des groupements ammonium quaternaire.

5. Structure plane préparée selon un procédé de l'une quelconque des revendications 1 à 4 avec un revêtement antistatique régulier et ayant une bonne adhérence, ledit revêtement présentant une épaisseur de couche correspondant à un poids surfacique variant de 0,2 à 10 mg/m².
